# EUROPÄISCHE PATENTSCHRIFT

(11) **EP 2 852 292 B1**
(45) Veröffentlichungstag und Bekanntmachung des Hinweises auf die Patenterteilung: **19.10.2016**
(21) Anmeldenummer: 13721961.4
(22) Anmeldetag: 08.05.2013
(51) Int. Cl.: A23G 3/34, A23G 3/02, A23G 3/04, F28D 7/10

(54) **VORRICHTUNG ZUM ERWÄRMEN EINER MASSE, INSBESONDERE EINER SÜSSWARENMASSE, UND VERFAHREN ZUR HERSTELLUNG DER VORRICHTUNG**
DEVICE FOR HEATING A MIXTURE, IN PARTICULAR A CONFECTIONERY MIXTURE, AND METHOD FOR PRODUCING SAID DEVICE
DISPOSITIF POUR CHAUFFER UNE MASSE, EN PARTICULIER UNE MASSE DE CONFISERIE ET PROCÉDÉ DE PRODUCTION DUDIT DISPOSITIF

(30) Priorität: 22.05.2012 DE 102012208559
(43) Veröffentlichungstag der Anmeldung: 01.04.2015
(73) Patentinhaber: Robert Bosch GmbH, 70442 Stuttgart (DE)
(72) Erfinder: DERKS, Manuel, 41542 Dormagen (DE); HORNSCHUCH, Stephan, 41238 Moenchengladbach (DE); GIERLINGS, Johannes, 41366 Schwalmtal (DE); KLABISCH, Adrian, 41179 Mönchengladbach (DE); NIESSEN, Eric, 41366 Schwalmtal (DE)
(86) Internationale Anmeldenummer: PCT/EP2013/059579
(87) Internationale Veröffentlichungsnummer: WO 2013/174652

(56) Entgegenhaltungen:
- WO-A2-2006/096833
- CH-A5- 673 334
- DE-A1- 19 624 030
- US-A- 3 323 585
- US-A1- 2008 264 617
- US-A1- 2009 159 248

## Beschreibung

### Stand der Technik

Die Erfindung geht aus von einer Vorrichtung zum Erwärmen einer Masse, insbesondere einer Süßwarenmasse sowie ein Verfahren zur Herstellung der Vorrichtung nach der Gattung der unabhängigen Ansprüche. Eine gattungsgemäße Vorrichtung ist bereits aus der DE 10 2004 029 814 B3 bekannt. Die Vorrichtung weist einen Durchlauferhitzer auf, aus dem die Süßwarenmasse in einen Ausdampfraum überführt wird. Der Ausdampfraum dient der Trennung und dem Abführen gasförmiger Bestandteile der gekochten Süßwarenmasse. Um die Kondensation der gasförmigen Bestandteile der Süßwarenmasse an kondensationswilligen Wandbereichen des Ausdampfraumes zu vermeiden, wird vorgeschlagen, in den Ausdampfraum ein zusätzliches Fremdmedium kondensationswilligen Bereichen zuzuführen. Im Übergang zwischen Wärmetauscher und Ausdampfraum ist ein Rohrabschnitt doppelwandig ausgeführt, so dass die Temperatur der Süßwarenmasse bei Ihrem Transport in den Ausdampfraum nicht unter einen bestimmten Wert fällt. Aus der DE 38 27 585 C2 ist bereits ein Brauchwasserspeichererhitzer bekannt. Im unteren Teil des als gewendelte Rohrschlange ausgebildeten Wärmetauschers erfolgt die Zuführung des Kaltwassers derart, dass das Kaltwasser in einem Koaxialrohr durch die Wendeln des Wärmetauschers geleitet wird. Hierdurch wird ein guter Übergang von dem noch eine Restwärme aufweisenden Heizmedium im Wärmetauscher an das in den Speicherbehälter abgegebene Kaltwasser erreicht. Aus der DE 33 15 219 C2 ist ein mit Fernwärme als Heizmedium betreibbarer Brauchwasserspeichererhitzer bekannt. Die Verwendung dieser Speicher für Süßwarenmassen ist jedoch nicht vorgesehen.

So offenbart die WO 2006/096833 einen koaxialen Flusswärmetauscher. Über diesen Wärmetauscher ist ein Wärmeaustausch über beispielsweise Grund-, See-, Fluss- oder Meerwasser als primäre oder sekundäre Wärmequelle genutzt.

Aus der US 2008/0264617 A1 ist ein Wärmetauscher für alternierende Temperaturen von Wasser bekannt. Dieser zeichnet sich durch eine Rohr-in-Rohr-Bauweise aus zum Wärmeaustausch zwischen dem Wärmeträger und Wasser.

Aus der DE 19624030 A1 ist bereits ein Verfahren zur Herstellung eines gewendelten Koaxialrohrs für einen Wärmetauscher und entsprechender Wärmetauscher bekannt, der ein gewendeltes Koaxialrohr aufweist.

Aus der US 3323585 ist ein Wärmetauscher mit mehreren innenliegenden Rohren bekannt, welcher auch zur Verarbeitung von Flüssigkeiten wie beispielsweise Milch etc. eingesetzt werden kann.

### Offenbarung der Erfindung

Der Erfindung liegt die Aufgabe zu Grunde, den Bauraum der gattungsgemäßen Vorrichtung weiter zu reduzieren bei einfacher Herstellung. Diese Aufgabe wird gelöst durch die Merkmale der unabhängigen Ansprüche.

### Vorteile der Erfindung

Die erfindungsgemäße Vorrichtung zum Erwärmen einer Masse, insbesondere einer Süßwarenmasse, hat demgegenüber den Vorteil, dass eine wesentlich kompaktere Bauweise erreicht wird, da nun ein Großraumbehälter wie ein Dampfbehälter durch eine kleinvolumige Heizungswendel ersetzt werden kann. Dadurch können der Bauraum und die Kosten minimiert werden. Außerdem vereinfachen sich die Zulassungsanforderungen für Druckbehälter. Durch die mögliche spiralförmige Führung des Wärmeträgers wird die Masse aufgrund der besseren Strömungsführung des Wärmeträgers wie beispielsweise Dampf effektiver erwärmt.

Erfindungsgemäß ist vorgesehen, dass die Rohrschlange zumindest teilweise einen Brüdentrennraum umgibt. Die Rohrschlange ist somit Bestandteil des Außenmantels. Dadurch lässt sich weiter die Platzersparnis erhöhen, indem innerhalb der Rohrschlange weitere prozessrelevante Bauteile angeordnet sind. Außerdem kann die Abwärme der Rohrschlange gezielt für die Beheizung des Brüdentrennraums verwendet werden. Außerdem verkürzt sich die Übergangsstrecke zwischen Koch- und Brüdentrennraum und zugehörige Einlaufgeometrie.

Dank der erfindungsgemäßen Vorrichtung kann auch die zu erwärmende Masse so geführt werden, dass sich die Verweilzeit der zu erwärmenden Masse vergleichmäßigt, so dass sich Inhomogenitäten reduzieren. Schlecht durchströmte Bereiche können reduziert werden, so dass sich die Gefahr von Verpfropfungen oder Anbackungen verringert.

Insbesondere bei einer spiralförmigen Ausbildung der Rohrschlange der erfindungsgemäßen Vorrichtung kann eine Minderbelegung der Beheizungsfläche reduziert werden. Die Gefahr von stark beschleunigten Pfropfenströmungen, die die Verweilzeit der Masse stark schwanken lassen, und daraus resultierende unerwünschte Inhomogenitäten lassen sich verringern. Eine vergleichmäßigte Strömungsführung der Masse reduziert einen sonst möglichen Stau oder Verwirbelungen der Masse, so dass sich die Gefahr von Pfropfenbildung weiter verringert.

Bei einer zweckmäßigen Weiterbildung ist vorgesehen, dass Außenwendel und/oder Innenwendel der Rohrschlange einen kreisförmigen oder ovalen Querschnitt besitzen. Dadurch werden zu eventuell störenden Verwirbelungen führende Kanten gezielt vermieden.

In einer zweckmäßigen Weiterbildung ist vorgesehen, dass die zu erwärmende Masse in der Innenwendel und der Wärmeträger in der Außenwendel, die die Innenwendel komplett umgibt, geführt sind. Dadurch kann die zu erwärmende Masse besonders gut auf die gewünschte Temperatur gebracht und auch gehalten werden.

In einer zweckmäßigen Weiterbildung ist vorgesehen, dass zu erwärmende Masse und Wärmeträger gleichgerichtet oder gegengerichtet geführt sind. Damit lassen sich gezielt Wärmeübergang und/oder Zu- und Abführungen der Masse und des Wärmeträgers optimieren. Je nach Wärmeträger könnte bei gegengerichteter Führung eine bessere Wärmeleistung erzielt werden.

In einer zweckmäßigen Weiterbildung ist zumindest ein Abstandshalter vorgesehen zur Fixierung und/oder Beabstandung der Innenwendel in der Außenwendel. Dadurch lässt sich auf einfache Art und Weise ein gleichmäßiger Wärmeübergang zwischen Wärmeträger und zu erwärmender Masse erzielen. Bevorzugt sind mehrere Abstandshalter mit demselben Abstand zueinander vorgesehen, wodurch sich eine gleichmäßige Halterung und einfache Montage erreichen lässt. Besonders bevorzugt könnten drei Abstandshalter, um jeweils 120° zueinander versetzt um den kreisförmigen Querschnitt der Innenwendel angeordnet, zum Einsatz kommen. Besonders bevorzugt ist als Abstandshalter ein Draht oder ein Stab vorgesehen. Dieser Abstandshalter ist besonders zweckmäßig um die Innenwendel gewickelt, insbesondere spiralförmig, wodurch der Mindestabstand zwischen Innenwendel und Außenwendel eingehalten wird. Durch die gewickelte Ausgestaltung können eventuelle Verspannungen zwischen den beiden Wendeln vermieden werden, die zu Beschädigungen führen könnten. Außerdem wird dadurch die Zirkulation des Wärmeträgers - wie beispielsweise Dampf -und die Oberflächenbenetzung der Innenwendel, die bevorzugt das Produkt führt, gewährleistet.

In einer zweckmäßigen Weiterbildung ist vorgesehen, dass die masseführende Innen- oder Außenwendel tangential in den Brüdentrennraum einmündet. Durch die sich hieraus ergebende Strömung lassen sich Kondensatbildungen im Brüdentrennraum reduzieren.

In einem erfindungsgemäßen Verfahren zur Herstellung der Vorrichtung zum Erwärmen einer Masse ist vorgesehen, dass bei einem ersten Schritt ein - insbesondere kontinuierlicher - Abstandshalter um eine Innenwendel angeordnet, bevorzugt gewickelt wird. Nachfolgend wird Innenwendel mit darum gewickelten Abstandshalter in das Innere der Außenwendel gebracht. Anschließend werden die so zusammengefügten Komponenten gemeinsam auf einen definierten Durchmesser gebogen. Dadurch wird in besonders bevorzugter Art und Weise die Vorrichtung zum Erwärmen einer Masse hergestellt. Dadurch, dass der Abstandshalter lediglich um die Innenwendel gewickelt ist, können Verspannungen von gehefteten Abstandshaltern zwischen den Wendeln vermieden werden. Dadurch reduzieren sich Verspannungen, da der gewickelte Abstandshalter sich frei ausdehnen kann. Ein Aufreißen der Rohrwendeln wird durch die Verwendung von kontinuierlichen Abstandshaltern (beim Herstellungsvorgang) effektiv vermieden.

Weitere zweckmäßige Weiterbildungen ergeben sich aus weiteren abhängigen Ansprüchen und aus der Beschreibung.

### Zeichnungen

Ein Ausführungsbeispiel der erfindungsgemäßen Vorrichtung zum Erwärmen einer Masse, insbesondere einer Süßwarenmasse ist in den Figuren dargestellt und wird nachfolgend näher erläutert.

### Es zeigen:

- die Figur 1: eine detaillierte Ansicht der Vorrichtung mit Anschlüssen,
- die Figur 2: eine entsprechende Schnittdarstellung mit einem vergrößerten Ausschnitt A,
- die Figur 3: die Verwendung der Rohrschlange als ein Außenmantel eines Prozessbehälters in einer ersten Schnittdarstellung,
- die Figur 4: eine Anordnung gemäß Figur 3 in einer weiteren Schnittdarstellung,
- die Figur 5: eine perspektivische Ansicht eines Teils der Innenwendel mit um die Innenwendel spiralförmig angeordneten Abstandshalter sowie
- die Figur 6: eine perspektivische Ansicht von oben auf den Wärmetauscher, bestehend aus der in Fig. 5 gezeigten Innenwendel mit Abstandshalter zur Einstellung des Abstands zur Außenwendel.

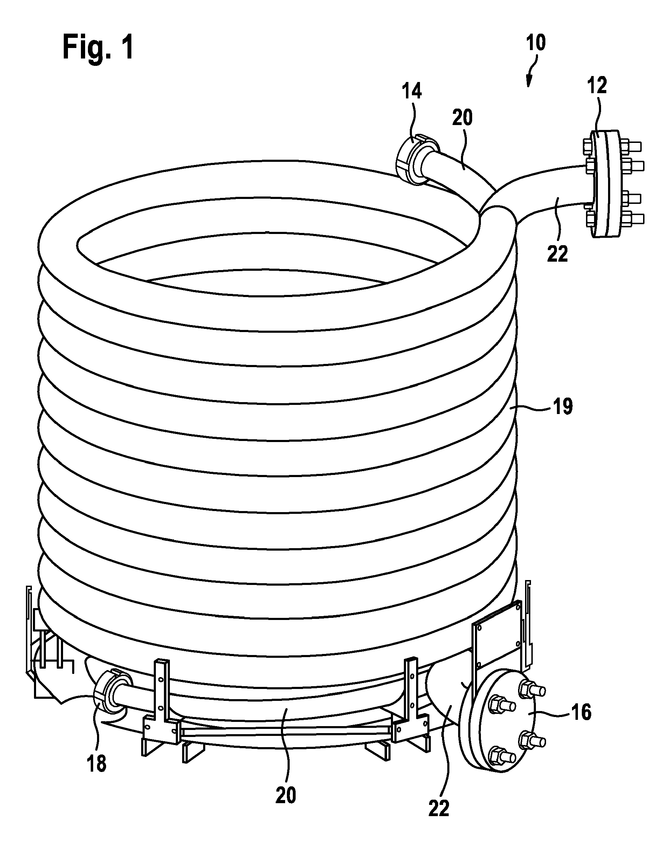

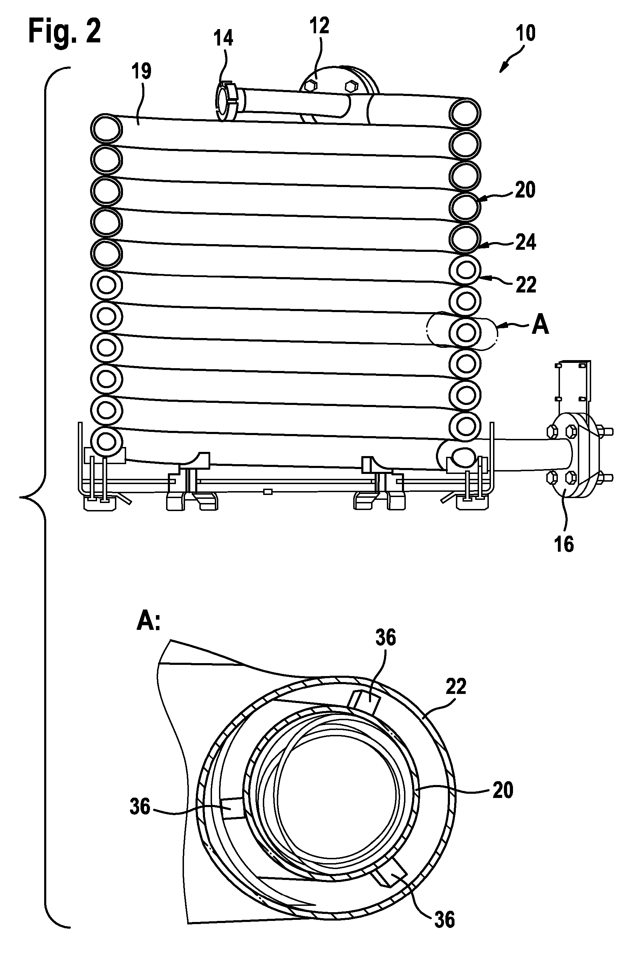

Bei dem Ausführungsbeispiel gemäß Figur 1 ist im unteren Bereich einer Rohrschlange 19 ein Produkteingang 18 zur Zuführung der zu erwärmenden Masse vorgesehen. Die zu erwärmende Masse, insbesondere Süßwarenmasse wird über eine Innenwendel 20 eingeleitet und geführt, die dann mit einer Außenwendel 22 zusammengeführt wird, die die Innenwendel 20 umschließt. Im unteren Bereich mündet die Außenwendel 22 in einen Ausgang 16 für einen Wärmeträger. Nach der Zusammenführung von Innenwendel 20 und Außenwendel 22 verlaufen diese spiralförmig mit im Wesentlichen konstanter Steigung nach oben. Zwischen der Innenseite der Außenwendel 22 und der Außenseite der Innenwendel 20 bildet sich ein Ringspalt 24 (vgl. Figur 2), in dem dann der Wärmeträger geführt wird. Die Spirale der Rohrschlange 19 ist hierbei so aufgebaut, dass zwischen den einzelnen Windungen vorzugsweise keine Zwischenräume entstehen. Die einzelnen Spiralen weisen denselben Durchmesser auf, so dass die Rohrschlange 19 in etwa einen zylinderförmigen Mantel bildet. Im oberen Bereich trennen sich Innenwendel 20 und Außenwendel 22 wieder. Die Innenwendel 20 endet in einem Produktausgang 14, über den die erwärmte Masse abgeführt wird. Die Außenwendel 22 mündet in einen Eingang 12 für den Wärmeträger. Die genannten Elemente können Bestandteile einer Vorrichtung 10 zum Erwärmen einer Masse, vorzugsweise einer Süßwarenmasse sein.

Die Ausführungsform nach Figur 1 ist in Figur 2 im Schnitt dargestellt. Man sieht, dass die Innenwendel 20 einen im Wesentlichen kreisförmigen Querschnitt aufweist und rohrförmig ausgebildet ist. Die Innenwendel 20 wird von der Außenwendel 22 umgeben. Die Außenwendel 22 ist ebenfalls rohrförmig ausgebildet und weist einen runden Querschnitt auf. Zwischen der Innenwendel 20 und der Außenwendel 22 ist ein Ringspalt 24 gebildet, in dem der Wärmeträger geführt wird. Im Inneren der Innenwendel 20 wird die zu erwärmende Masse geführt. Nach oben hin vergrößert sich der Querschnitt der Innenwendel 20. Damit lassen sich die gewünschten Strömungsverhältnisse einstellen. Der Durchmesser der Außenwendel 22 bleibt im Wesentlichen konstant. In der Detailansicht A sind Abstandshalter 36 gezeigt. Diese sind mit der Außenseite der Innenwendel 20 fest verbunden, vorzugsweise verschweißt. Die Außenkontur der Abstandshalter 36 stützt die Innenwendel 20 an der Innenseite der Außenwendel 22 ab. Bevorzugt sind drei Abstandshalter 36 vorgesehen, die um jeweils 120° versetzt um den kreisförmigen Querschnitt der Innenwendel 20 angeordnet sind. Diese Abstandshalter 36 sind beispielsweise als rechteckförmige Pins ausgeführt. Diese Art der Befestigung wiederholt sich in geeigneten Abständen der Rohrschlange 19. Anzahl, Anordnung und Geometrie der Abstandshalter 36 könnte variieren. Alternativ könnte auch vorgesehen sein, die Abstandshalter 36 mit der Innenseite der Außenwendel 22 fest zu verbinden.

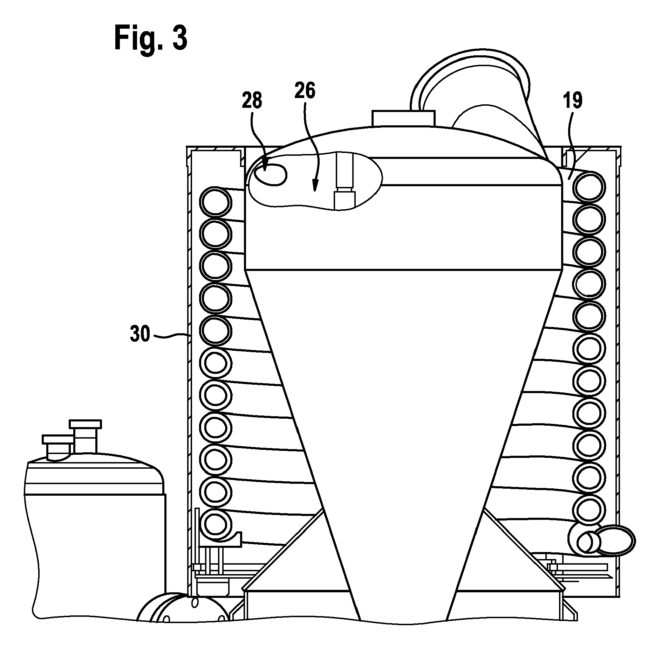

Die Vorrichtung 10 gemäß den Figuren 1 und 2 umgibt bei dem Ausführungsbeispiel nach Figur 3 als Außenmantel 30 einen Brüdentrennraum 26. Der Brüdentrennraum 26 ist vorzugsweise trichterförmig ausgeführt. Unterhalb des Brüdentrennraums 26 liegt ein Sammelraum 32, der über ein Ventil 34 mit dem Brüdentrennraum 26 verbunden werden kann. Bei dem Ausführungsbeispiel gemäß Figur 3 ist ein Einlauf 28 gezeigt. Hierbei wird der Endabschnitt der Innenwendel 20 tangential in den oberen Bereich des Brüdentrennraums 26 geführt. Die so in den Brüdentrennraum 26 eingeführte erwärmte Masse überstreicht strömungsgünstig die zylinderförmige Innenfläche des Brüdentrennraums 26.

Die in den Figuren 1 und 2 dargstellte Vorrichtung dient als Kocher für die zu erwärmende Masse, vorzugsweise eine Süßwarenmasse. Innenwendel 20 und Außenwendel 22 werden spiralförmig geführt. In dem sich ergebenden Ringspalt 24 wird der Wärmeträger wie beispielsweise Dampf geführt. Die Innenwendel 20 könnte gegenüber der Außenwendel 22 sowohl zentrisch wie auch nicht zentrisch angeordnet werden. Sowohl Innen- als auch Außenwendel 20, 22 können von dem dargestellten Kreisquerschnitt abweichen. Alternativ könnten auch mehrere Wendeln ineinander oder in einer Außenwendel geführt werden.

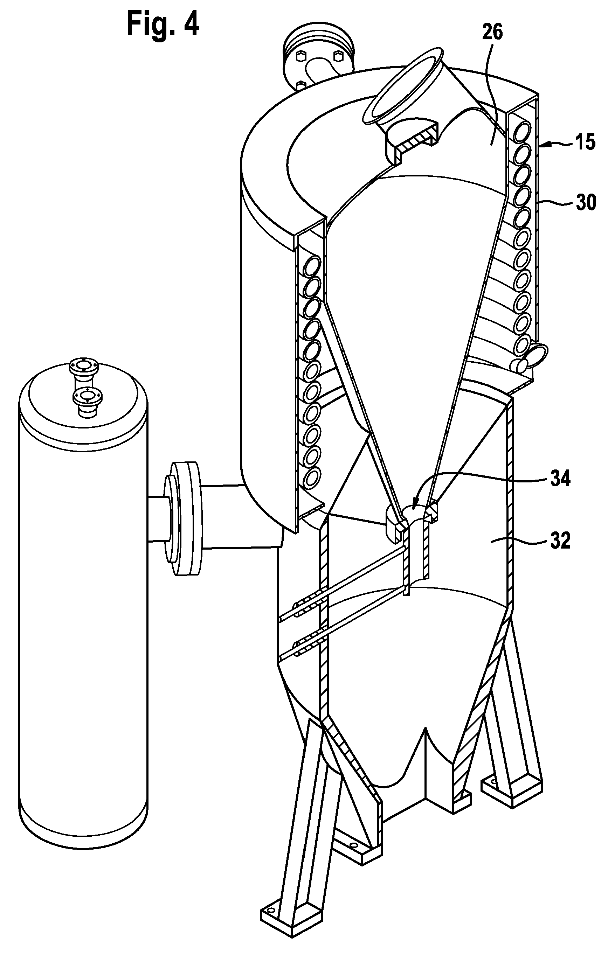

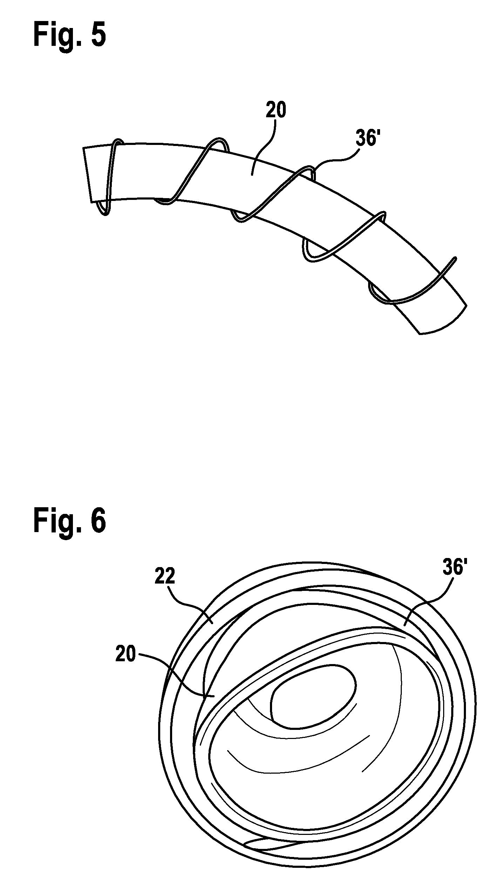

Das Ausführungsbeispiel gemäß Fig. 5 unterscheidet sich von den vorhergehenden in der Wahl eines anderen Abstandshalters 36'. Der Abstandshalter 36' ist als Stab, insbesondere als Spiralstab ausgeführt. Im Unterschied zu den vorherigen Ausführungsbeispielen kann dieser Abstandshalter 36' als kontinuierlicher Abstandshalter 36' bezeichnet werden, da er insbesondere einstückig kontinuierlich zwischen Innenwendel 20 und Außenwendel 22 angeordnet ist. Vor dem Biegen der Innenwendel 20 bzw. der Außenwendel 22 in die in den Figuren 1 bis 4 gezeigte Spirale wird bei dem Ausführungsbeispiel gemäß Fig. 5 der Abstandshalter 36' zuerst um die Außenseite der Innenwendel 20 gewickelt, vorzugsweise spiralförmig. Durch die Wahl der Steigung des gewickelten Abstandshalters 36' lässt sich die Maßhaltigkeit bezogen auf die Rundheit der Innenwendel 20 und der Außenwendel 22 beeinflussen. Nachdem der Abstandshalter 36'um die Innenwendel 20 gewickelt wurde, werden in einem nachfolgenden Schritt die Innenwendel 20, der Abstandshalter 36' mit der Außenwendel 22 zusammengefügt. Die Innenwendel 20 und der Abstandshalter 36' gelangen in das Innere der Außenwendel 22. Nachdem Innenwendel 20, Abstandshalter 36' und Außenwendel 22 zusammengefügt wurden, werden diese gemeinsam gebogen durch eine nicht näher gezeigte Vorrichtung. Durch das gemeinsame Biegen entsteht die beispielsweise in den Figuren 1 bis 4 gezeigte spiralförmige Ausgestaltung der Rohrschlange 19. Hierzu ist eine entsprechende Biegevorrichtung vorgesehen, die die Innenwendel 20, die Außenwendel 22 und den Abstandshalter 36'als Paket auf einen definierten Durchmesser biegt. Hierdurch wird der Mindestabstand der beiden Wendeln 20, 22 zueinander abgesichert. Dazu ist die Stärke des Stabs 36' in der gewünschten Art und Weise zu wählen. Ziel ist es, den Dampffluss und die Oberflächenbenetzung der Außenseite der Innenwendel 20 zu gewährleisten. Auch ist der Abfluss des entstehenden Dampfkondensats sicherzustellen, wenn als Heizmedium Dampf verwendet ist. Da der Abstandshalter 36' lediglich um die Innenwendel 20 gewickelt ist, jedoch nur teilweise geheftet ist, beispielsweise geschweißt oder ähnliches, kann sich der Abstandshalter 36', nämlich der gewickelte Spiralstab, zumindest abschnittsweise frei ausdehnen. Ein Aufreißen der Innenwendel 20, bzw. Außenwendel 22 aufgrund von Wärmespannungen ist aus diesem Grund reduziert. Weiterhin könnte der Abstandshalter 36' nur abschnittsweise um die Innenwendel 20 gewickelt sein. Auch die Geometrie des Abstandshalters 36' wird der Fachmann nach Bedarf der Produkteigenschaften entsprechend festlegen. Es sind verschiedene Formen des insbesondere kontinuierlichen Abstandshalters 36' möglich (bevorzugt mit rundem Querschnitt, auch möglich eckig, als verdrillte Blechstreifen (Wirbelelemente) oder ähnliches). Wickelart und Steigung des bevorzugt kontinuierlichen Abstandshalters 36' können zur Veränderung der Geometrie der Innenwendel 20 eingesetzt werden. Ein eng um die Innenwendel 20 gewickelter kontinuierlicher spiralförmiger Abstandshalter 36' führt beim Biegevorgang zu einer annähernd idealen runden Innenwendel 20. Ein weit aufgewickelter kontinuierlicher spiralförmiger Abstandshalter 36' führt zu einem abgewandelten Vieleck als Innenwendel 20. Kontinuierliche Abstandshalter 36' können sowohl zur Übertragung der Biegekräfte als auch zur Veränderung der Rohrwendelverläufe wie oben beschrieben (nahezu rund, gründetes Vieleck, eingezogene Rohrgeometrien) verwendet werden. Auch kann der Abstandshalter 36' (verfahrenstechnisch begründet) gezielt als Strömungsführungs- oder Wirbelelement eingesetzt werden. Der kontinuierliche Abstandshalter 36' kann nach dem Biegevorgang je nach Anwendung in den Rohrschlangen 19 verbleiben oder nach dem Biegevorgang entfernt werden. Die kontinuierlichen Abstandshalter 36' werden je nach Bedarf nur lokal bzw. punktuell geschweißt bzw. geheftet. Will man eine genauere Strömung erzeugen kann es auch sinnvoll sein, die kontinuierlichen Abstandshalter 36' eng anliegend auf der Innenwendel 20 zu fixieren.

Steigung und Abstand der Wendeln 20, 22 könnte variieren. Die Spiralen der Rohrschlangen 19 könnten auch so aufgebaut sein, dass sich zwischen den einzelnen Windungen zumindest teilweise Zwischenräume ausbilden. Gegebenenfalls könnte die Strömungsrichtung des Wärmeträgers relativ zur erwärmenden Masse gleich- oder gegengerichtet sein. Auch die Ein- und Ausgänge 12, 14, 16, 18 des Wärmeträgers und der zu erwärmenden Masse könnten anders angeordnet werden. Auch die Steigung und der Abstand der Wendeln 20, 22 könnten variieren. Auch könnten mehrere Ein- und Ausgänge zum Einsatz kommen. Vorzugsweise ist bei Dampf als Wärmeträger der Ausgang 16 unten angeordnet und dient der Kondensatabführung. Die zu erwärmende Masse wird zweckmäßiger Weise von unten nach oben gepumpt, da der ausgekochte Wasserdampf nach oben geht.

Insbesondere eignet sich die beschriebene Vorrichtung für kontinuierliche Kochprozesse in der Süßwarenindustrie. Die zu erwärmende Masse könnte aus Hartzucker bzw. Weichzucker bestehen. Grundsätzlich könnten Süßwarenmassen ohne Milchanteil bzw. mit geringem Milchanteil, sowie anderen Zusätzen hiermit erhitzt werden.

## Patentansprüche

1. Vorrichtung zum Erwärmen einer Masse, insbesondere einer Süßwarenmasse, umfassend zumindest eine Rohrschlange (19), wobei die Rohrschlange (19) zumindest eine Innenwendel (20) und zumindest eine Außenwendel (22) umfasst, wobei die Rohrschlange (19) zur Führung sowohl der zu erwärmenden Masse als auch eines der Erwärmung der Masse dienenden Wärmeträgers vorgesehen ist, **dadurch gekennzeichnet, dass** die Rohrschlange (19) einen Brüdentrennraum (26) zumindest teilweise umgibt.

2. Vorrichtung nach Anspruch 1, **dadurch gekennzeichnet, dass** sich der Querschnitt der Innenwendel (20) und/oder der Außenwendel (22) verändert.

3. Vorrichtung nach einem der vorhergehenden Ansprüche, **dadurch gekennzeichnet, dass** zumindest ein Abstandshalter (36, 36') vorgesehen ist zur beabstandeten Positionierung der Innenwendel (20) von der Außenwendel (22).

4. Vorrichtung nach einem der vorhergehenden Ansprüche, **dadurch gekennzeichnet, dass** der Abstandshalter (36, 36') mit der Innenwendel (20) oder der Außenwendel (22) fest verbunden, vorzugsweise verschweißt ist, oder dass der Abstandshalter (36, 36') um die Innenwendel (20) gewickelt ist.

5. Vorrichtung nach einem der vorhergehenden Ansprüche, **dadurch gekennzeichnet, dass** mehrere Abstandshalter (36, 36) vorgesehen sind, die vorzugsweise voneinander denselben Abstand aufweisen.

6. Vorrichtung nach einem der vorhergehenden Ansprüche, **dadurch gekennzeichnet, dass** als Abstandshalter (36') ein Stab oder ein Draht verwendet ist.

7. Vorrichtung nach einem der vorhergehenden Ansprüche, **dadurch gekennzeichnet, dass** der Abstandshalter (36, 36') lose oder lediglich lokal fixiert zwischen Innenwendel (20) und Außenwendel (22), vorzugsweise spiralförmig angeordnet ist.

8. Vorrichtung nach einem der vorhergehenden Ansprüche, **dadurch gekennzeichnet, dass** die Rohrschlange (19) spiralförmig ausgeführt ist und eine insbesondere konstante Steigung aufweist.

9. Vorrichtung nach einem der vorhergehenden Ansprüche, **dadurch gekennzeichnet, dass** ein Einlauf (28) so angeordnet ist, um die zu erwärmende Masse dem Brüdentrennraum (26) vorzugsweise tangential zuzuführen.

10. Vorrichtung nach einem der vorhergehenden Ansprüche, **dadurch gekennzeichnet, dass** ein Produkteingang (18) zur Zuführung der zu erwärmenden Masse im unteren Bereich der Vorrichtung angeordnet ist und/oder der Produktausgang (14) im oberen Bereich der Vorrichtung angeordnet ist.

11. Vorrichtung nach einem der vorhergehenden Ansprüche, **dadurch gekennzeichnet, dass** ein Eingang (12) für den Wärmeträger im oberen Bereich der Vorrichtung angeordnet ist und/oder der Ausgang (16) für den Wärmeträger im unteren Bereich der Vorrichtung angeordnet ist.

12. Verfahren zur Herstellung einer Vorrichtung (10) nach einem der vorhergehenden Ansprüche, wobei die Vorrichtung (10) zumindest eine Rohrschlange (19) umfasst, wobei die Rohrschlange (19) zumindest eine Innenwendel (20) und zumindest eine Außenwendel (22) umfasst, und wobei die Rohrschlange (19) zur Führung sowohl der zu erwärmenden Masse als auch zur Erwärmung der Masse dienenden Wärmeträgers vorgesehen ist, wobei die Rohrschlange (19) einen Brüdentrennraum (26) zumindest teilweise umgibt, **gekennzeichnet durch** folgende Herstellschritte:
- Anordnen zumindest eines Abstandshalters (36, 36') an bzw. um die Innenwendel (20),
- Zusammenfügen des Abstandshalters (36, 36') und Innenwendel (20) mit der Außenwendel (22),
- Biegen der zusammengefügten Innenwendel (20), Abstandshalter (36') und Außenwendel (22) bevorzugt in einer spiralförmigen Bauart.

13. Verfahren nach Anspruch 12, **dadurch gekennzeichnet, dass** der Abstandshalter (36, 36') um die Innenwendel (20) gewickelt wird, insbesondere spiralförmig.

14. Verfahren nach Anspruch 12 oder 13, **dadurch gekennzeichnet, dass** der Abstandshalter (36, 36') vor oder nach dem Biegen zumindest lokal fixiert wird mit der Innenwendel (20) und/oder Außenwendel (22) oder nach dem Biegen wieder entfernt wird.

## Claims

1. Device for heating a mixture, in particular a confectionery mixture, the device comprising at least one pipe coil (19), wherein the pipe coil (19) comprises at least one inner coil (20) and at least one outer coil (22), wherein the pipe coil (19) is provided for guiding the mixture to be heated as well as a heat carrier which serves for heating the mixture, **characterized in that** the pipe coil (19) at least partially surrounds a vapour-separating space (26).

2. Device according to Claim 1, **characterized in that** the cross section of the inner coil (20) and/or of the outer coil (22) is variable.

3. Device according to one of the preceding claims, **characterized in that** at least one spacer (36, 36') is provided for positioning the inner coil (20) so as to be spaced apart from the outer coil (22).

4. Device according to one of the preceding claims, **characterized in that** the spacer (36, 36') is fixedly connected, preferably welded, to the inner coil (20) or to the outer coil (22), or that the spacer (36, 36') is wound around the inner coil (20).

5. Device according to one of the preceding claims, **characterized in that** a plurality of spacers (36, 36) which preferably are identically spaced apart from one another are provided.

6. Device according to one of the preceding claims, **characterized in that** a rod or a wire is used as a spacer (36').

7. Device according to one of the preceding claims, **characterized in that** the spacer (36, 36') is disposed in a preferably helical manner so as to be loose or merely fixed in a localized manner between the inner coil (20) and the outer coil (22).

8. Device according to one of the preceding claims, **characterized in that** the pipe coil (19) is embodied in a helical manner and in particular has a constant pitch.

9. Device according to one of the preceding claims, **characterized in that** an inlet (28) is disposed so as to infeed the mixture to be heated to the vapour-separating space (26) in a preferably tangential manner.

10. Device according to one of the preceding claims, **characterized in that** a product entry (18) for infeeding the mixture to be heated is disposed in the lower region of the device, and/or the product exit (14) is disposed in the upper region of the device.

11. Device according to one of the preceding claims, **characterized in that** an entry (12) for the heat carrier is disposed in the upper region of the device, and/or the exit (16) for the heat carrier is disposed in the lower region of the device.

12. Method for producing a device (10) according to one of the preceding claims, wherein the device (10) comprises at least one pipe coil (19), wherein the pipe coil (19) comprises at least one inner coil (20) and at least one outer coil (22), and wherein the pipe coil (19) is provided for guiding the mixture to be heated as well as a heat carrier which serves for heating the mixture, wherein the pipe coil (19) at least partially surrounds a vapour-separating space (26), the method **characterized by** the following production steps:
- disposing at least one spacer (36, 36') on or around the inner coil (20), respectively;
- assembling the spacer (36, 36') and the inner coil (20) with the outer coil (22);
- bending the assembled inner coil (20), the spacer (36'), and the outer coil (22), preferably in a helical construction mode.

13. Method according to Claim 12, **characterized in that** the spacer (36, 36') is wound, in particular in a helical manner, around the inner coil (20).

14. Method according to Claim 12 or 13, **characterized in that** the spacer (36, 36') prior to or post bending is fixed in at least a localized manner to the inner coil (20) and/or the outer coil (22), or post bending is removed again.

## Revendications

1. Dispositif pour chauffer une masse, en particulier une masse de confiseries, comprenant au moins un serpentin (19), le serpentin (19) comprenant au moins une spirale intérieure (20) et au moins une spirale extérieure (22), le serpentin (19) étant prévu pour guider à la fois la masse à chauffer ainsi qu'un fluide caloporteur servant à chauffer la masse, **caractérisé en ce que** le serpentin (19) entoure au moins en partie un espace de séparation des vapeurs (26).

2. Dispositif selon la revendication 1, **caractérisé en ce que** la section transversale de la spirale intérieure (20) et/ou de la spirale extérieure (22) varient.

3. Dispositif selon l'une quelconque des revendications précédentes, **caractérisé en ce qu'**au moins un élément d'espacement (36, 36 ') est prévu pour le positionnement espacé de la spirale intérieure (20) par rapport à la spirale extérieure (22).

4. Dispositif selon l'une quelconque des revendications précédentes, **caractérisé en ce que** l'élément d'espacement (36, 36') est connecté fixement à la spirale intérieure (20) ou à la spirale extérieure (22), de préférence par soudage, ou **en ce que** l'élément d'espacement (36, 36') est enroulé autour de la spirale intérieure (20).

5. Dispositif selon l'une quelconque des revendications précédentes, **caractérisé en ce que** plusieurs éléments d'espacement (36, 36) sont prévus, lesquels présentent de préférence le même espacement les uns des autres.

6. Dispositif selon l'une quelconque des revendications précédentes, **caractérisé en ce que** l'on utilise en tant qu'élément d'espacement (36') une barre ou un fil.

7. Dispositif selon l'une quelconque des revendications précédentes, **caractérisé en ce que** l'élément d'espacement (36, 36') est fixé de manière lâche ou seulement localement entre la spirale intérieure (20) et la spirale extérieure (22), de préférence en forme de spirale.

8. Dispositif selon l'une quelconque des revendications précédentes, **caractérisé en ce que** le serpentin (19) est réalisé en forme de spirale et présente un pas notamment constant.

9. Dispositif selon l'une quelconque des revendications précédentes, **caractérisé en ce qu'**une entrée (28) est disposée de manière à acheminer la masse à chauffer à l'espace de séparation des vapeurs (26) de préférence de manière tangentielle.

10. Dispositif selon l'une quelconque des revendications précédentes, **caractérisé en ce qu'**une entrée de produit (18) pour acheminer la masse à chauffer est disposée dans la région inférieure du dispositif et/ou la sortie de produit (14) est disposée dans la région supérieure du dispositif.

11. Dispositif selon l'une quelconque des revendications précédentes, **caractérisé en ce qu'**une entrée (12) pour le fluide caloporteur est disposée dans la région supérieure du dispositif et/ou la sortie (16) pour le fluide caloporteur est disposée dans la région inférieure du dispositif.

12. Procédé de fabrication d'un dispositif (10) selon l'une quelconque des revendications précédentes, dans lequel le dispositif (10) comprend au moins un serpentin (19), le serpentin (19) comprenant au moins une spirale intérieure (20) et au moins une spirale extérieure (22), et le serpentin (19) étant prévu pour guider à la fois la masse à chauffer ainsi que le fluide caloporteur servant à chauffer la masse, le serpentin (19) entourant au moins en partie un espace de séparation des vapeurs (26), **caractérisé par** les étapes de fabrication suivantes :
- agencement d'au moins un élément d'espacement (36, 36') sur ou autour de la spirale intérieure (20),
- assemblage de l'élément d'espacement (36, 36') et de la spirale intérieure (20) avec la spirale extérieure (22),
- flexion de la spirale intérieure (20), de l'élément d'espacement (36') et de la spirale extérieure (22) assemblés de préférence pour former une spirale.

13. Procédé selon la revendication 12, **caractérisé en ce que** l'élément d'espacement (36, 36') est enroulé autour de la spirale intérieure (20), en particulier en forme de spirale.

14. Procédé selon la revendication 12 ou 13, **caractérisé en ce que** l'élément d'espacement (36, 36') avant ou après la flexion est fixé au moins localement à la spirale intérieure (20) et/ou à la spirale extérieure (22) ou est à nouveau enlevé après la flexion.
